# EUROPÄISCHE PATENTSCHRIFT

(11) **EP 1 150 113 B1**
(45) Veröffentlichungstag und Bekanntmachung des Hinweises auf die Patenterteilung: **23.04.2003**
(21) Anmeldenummer: 01105758.5
(22) Anmeldetag: 08.03.2001
(51) Int. Cl.: G01N 3/30

(54) **Einrichtung zur selbsttätig ablaufende Kerbschlagbiegeversuche und Verfahren zur Durchführung derselben**
Autonomous testing machine for impact bending tests and corresponding method
Machine d'essai autonome de la résistance au choc d'éprouvettes en flexion et méthode correspondante

(30) Priorität: 27.04.2000 DE 10020700
(43) Veröffentlichungstag der Anmeldung: 31.10.2001
(73) Patentinhaber: Forschungszentrum Karlsruhe GmbH, 76133 Karlsruhe (DE)
(72) Erfinder: Dafferner, Bernhard, 76703 Kraichtal (DE); Ernst, Oliver, 76133 Karlsruhe (DE); Kunze, Ralf, 76135 Karlsruhe (DE)

(56) Entgegenhaltungen:
- EP-A- 0 802 405
- WO-A-00/19181
- DE-A- 3 541 562
- DE-A- 19 844 007

## Beschreibung

Die Erfindung betrifft eine Einrichtung für Kerbschlagbiegeversuche und ein Verfahren zum selbsttätigen, normgemäßen Ablauf derselben zur Ermittlung der mittleren Schlagzähigkeit der Proben einer Serie.

Kerbschlagbiegeversuche sind ein wesentlicher Bestandteil der Materialprüfung, mit ihnen kommt man zu zuverlässigen Aussagen über spezifisches Materialverhalten. Hierzu werden Serien an Proben gleichen Materials und gleicher Geometrie verwendet, die unter gleichen Bedingungen dem Kerbschlag ausgesetzt werden. Die Durchführung der Kerbschlagbiegeversuche ist normiert und für Kunststoffe beispielsweise in der Europäischen Norm EM ISO 179 "Kunststoffe - Bestimmung der Charpy-Schlagzähigkeit (ISO 179)" festgehalten.

In der DE 196 14 966 wird eine Prüfmaschine für Kerbschlagbiegeversuche vorgeschlagen, die stets gleiche Verhältnisse vor dem unmittelbaren Kerbschlag einrichtet. Aus einem temperierbaren Probenmagazin werden hierzu Proben entnommen und über eine Schiebeeinrichtung positionsgenau auf das Auf- und Widerlagerlager der Kerbschlageinrichtung transportiert.

Der Takt, mit dem eine Versuchsserie gefahren werden kann, wird von Faktoren, wie Schlagenergie, Transportvorgang der zum Serienversuch vorbereiteten Proben und Erwärmen der Proben, bestimmt.

Es ist naheliegend, daß bei Versuchsserien der Ablauf zeitlich so kurz wie möglich gehalten werden soll. Eine Automatisierung des komplexen Ablaufs drängt sich auf. Das ist beim Probentransport weitestgehend eingerichtet, so lange nur ein Pendel benötigt wird. Um aber mit unterschiedlichen Schlagenergien schlagen oder Schlagenergieoptimierung betreiben zu können, muß einfach das Tauschen des Pendelhammers mit einbezogen werden.

Bekannt sind hierzu bisher nur der manuelle Wechsel des Pendelhammers bei Schlagwerken in Zweisäulenbauweise. An einer solchen Einrichtung ist eine Lösung des automatischen Pendelhammerwechsels nicht oder allenfalls mit wirtschaftlich nicht tragbarem Aufwand möglich.

Der Erfindung liegt die Aufgabe zugrunde, Serien aus großen Stückzahlen gleichartiger Proben mit minimal notwendigem Zeitaufwand automatisch dem Kerbschlagversuch zuzuführen und die jeweiligen Schlagdaten aufzunehmen, zu speichern und auszuwerten.

Die Aufgabe wird durch eine Einrichtung für Kerbschlagbiegeversuche gemäß den Merkmalen des Anspruchs 1, die mit den Verfahrensschritten gemäß Anspruch 10 betrieben wird, gelöst.

Mit dieser Einrichtung steht bis auf die Parametereingaben und die Beschickung der Probenmagazine eine vollautomatische Anlage zur Verfügung, die neben der bekannten automatischen Erwärmung der Proben und deren positionsgenauem Transport auf den Aufund Widerlagerbock jetzt noch die Entnahme mit einer Greifeinrichtung eines vorgegebenen Pendelhammers aus einem Magazin mit Pendelhämmern mit im allgemeinen unterschiedlichen Schlagenergien ermöglicht.

Die Einrichtung besteht aus einem Pendelschlagwerk in Einsäulenbauweise und hat auf der Pendelhammerdrehachse eine kegelige Werkzeugaufnahme. In diese kegelige Aufnahme wird der Pendelhammer mit einem Werkzeugkegel auf seiner Drehachse eingeschoben und mit der Werkzeuggreifvorrichtung auf der Drehachse des Pendelschlagwerks über einen Antrieb axial herangezogen. Der Werkzeugkegel am Pendelhammer sitzt einerseits form- und kraftschlüssig im Aufnahmekegel des Pendelschlagwerks und läßt sich andrerseits mit der Transportgreifvorrichtung leicht abziehen.

Am Pendelschlagwerk sitzt ein Bock mit mindestens einem Aufund Widerlager, auf dem die aufgelegte und positionierte Probe mit dem eingespannten Pendelhammer geschlagen wird, d.h. die kreisförmige Schlagbahn des Pendelhammers verläuft zwischen dem Auf- und Widerlager durch oder die Schlagebene halbiert dasselbe. Bei Schlagpendeln unterschiedlicher Stiellänge sitzen auf dem Bock an den entsprechenden Stellen der durchlaufenden Schlagbahnen je ein Auf- und Widerlager.

Ein Magazin für Pendelhämmer unterschiedlicher, jedoch genormter Schlagenergie sitzt seitlich der Schlagebene. Von ihm wird über eine Anhebe- und Transporteinrichtung ein ausgewählter Pendelhammer mit Transportgreifvorrichtung aus dem Magazin entnommen oder darin abgesetzt. Diese Greifvorrichtung hält den Pendelhammer auch beim Transport zum Pendelschlagwerk, bis er dort in die kegelige Aufnahme eingesetzt ist oder greift ihn von dort wieder ab.

Auf der Drehachse des Pendelschlagwerks sitzt ein inkrementaler oder absolut codierter Drehwinkelgeber. Dieser wird über einen Mitnehmer beim Einsetzen des Pendelhammers mit dem Pendelschlagwerk ebenfalls form- und kraftschlüssig auf der Drehachse gekoppelt oder beim Abziehen davon wieder entkoppelt.

Eine erste Temperier- und Zuführeinheit für die zum Kerbschlag anliegende Probenserie dockt am gerade benötigten Auf- und Widerlager unmittelbar an, um den Transportweg so klein wie möglich zu halten.

Im Falle noch nicht mit Kerben versehenen Schlagproben kann der ersten Temperiereinheit alternativ eine zweite Temperiereinheit vorgeschaltet werden, in der die Probe oder die Serie an zu schlagenden Proben auf eine für den anschließenden Fräsvorgang optimale Bearbeitungstemperatur gebracht werden. An die zweite Temperiereinheit schließt sich über eine zweite Zuführeinheit eine Kerbschlagfräse an, in der die temperierten Proben zum Anbringen der Kerbe am vorgesehenen Ort nacheinander oder geeignet magaziniert, exponiert werden. Diese gerade gekerbten Proben werden dann der ersten Temperiereinheit, wie oben beschrieben, zugeführt. Schon gekerbte Proben werden gleich der ersten Temperiereinheit zugeführt.

Mit einer elektronischen Steuer- und Datenverarbeitungseinheit wird die Einrichtung gesteuert, die Messung durchgeführt, die Meßwerte aufgenommen und verarbeitet. Als Ergebnis wird die daraus statistisch ermittelte mittlere Schlagzähigkeit der untersuchten Probenserie für weitere Zwecke in einem PC beispielsweise festgehalten.

Mit der Einrichtung lassen sich Serien beliebiger Anzahl gleichartiger Prüflinge aus metallischem oder keramischem oder kunststoffartigem Material gemäß in Frage kommender Normvorschrift untersuchen.

In den Unteransprüchen sind zweckmäßige Ausgestaltungen für den reibungslosen Ablauf von Kerbschlagversuchen beschrieben. So sitzt auf der Achse des Pendelschlagwerks eine motorisch angetriebene Mitnehmerscheibe mit einem gummierten Mitnehmer, der den aus der Steigposition β nach dem Schlag zurückschwingende Pendelhammer vor einer erneuten Umkehr einholt, weich abfängt, um ihn vollends in den Auslöseriegel einzuklinken, und gegebenenfalls in eine neue Ausklingposition α zu drehen (Anspruch 2).

In Wechselposition steht der Pendelhammer senkrecht nach oben entgegengesetzt zur Schlagposition in der instabilen Lage, in der ihn der Auslöseriegel hält (Anspruch 3). Aus dieser wird er auch in die vorgebbare Auslöseposition, dem Fallwinkel α, gedreht, wobei ihn bis zur Auslösung der Auslöseriegel vor dem Fall zurückhält.

Im Magazin sind unterschiedliche Pendelhämmer mit jeweils von der einschlägigen Norm vorgegebener Schlagenergie abgehängt (Anspruch 5).

Zum sicheren Greifen ist der Werkzeugkegel auf der Drehachse des Pendelhammers mit zwei Ringnuten auf seiner Mantelfläche versehen, damit er einerseits von der Transportgreifvorrichtung und andrerseits von der Greifvorrichtung am Pendelschlagwerk gegriffen werden kann (Anspruch 6).

Am Ausgang der Fräseinheit ist eine Vermessungseinheit installiert (Anspruch 7), mit der die ausgeworfene, frisch gefräste Probe in ihrer Kontour und verbliebenen Materialbreite, der Restbreite, am Fuße der Kerbe vermessen wird. Andrerseits können aber auch schon gefräste Proben zur Vermessung vor der Temperierung für den Kerbschlagbiegeversuch zunächst dort eingeführt werden (siehe auch Anspruch 13). Die Vermessungseinheit kann ein Meßtaster mit inkrementalem Maßstab und einer Auswerteeinheit sein, die pneumatisch oder hydraulisch oder elektrisch betätigt wird (Anspruch 8), oder sie kann eine Aufnahmekamera sein, aus deren Aufnahmebild von der Probe in der Datenverarbeitungseinheit ein Kantenmodell erstellt, dann rechnerintern vermessen und mit einer oder der Vorgabe verglichen wird (Anspruch 9).

Steuerungsvorgänge an Anlagen lassen sich zuverlässig mit einer speicherprogrammierbaren Steuerung, SPS, einrichten. In dieser Einrichtung ist sie der Datenverarbeitungseinheit untergeordnet (Anspruch 10).

Die Anhebe- und Transporteinrichtung, die Transportgreifvorrichtung und die Greifvorrichtung für die Pendelhämmer müssen angetrieben werden. Der Antrieb muß zuverlässig und positionsgenau steuerbar sein. Dies läßt sich mit verschiedenen Antriebstechniken einrichten, pneumatisch, hydraulisch oder elektrisch (Anspruch 11).

Die Aufgabe wird weiter durch ein Verfahren mit den Schritten gemäß Anspruch 12 zum Betreiben der Einrichtung gemäß den Ansprüchen 1 bis 11 gelöst, das weiter unten in seinen Ablaufund Entscheidungsschritten erläutert wird.

Mit dieser Einrichtung können große Serien an beliebigen Stückzahlen jeweils gleichartiger Proben, schon gefräst oder ungefräst, bis auf die Beschickung der Temperiereinrichtung sowie der Eingabe der Anfangsdaten der jeweiligen, zu schlagenden Serie, dem Kerbschlagbiegeversuch ohne Gefährdung eines Menschen ausgesetzt werden. Bei handbetriebenen Anlagen besteht immer noch eine erhebliche Verletzungsgefahr während der Kerbschlagbiegeversuche.

Um die Leistungsfähigkeit der automatisierten Einrichtung aufzuzeigen, sei das folgende Beispiel ein Anhalt: es lassen sich Kunststoffproben in folgender Anzahl testen: 20 Magazine ä 60 Proben/(Magazin + Manntag) = 1200 Proben/Manntag. Das ist für dieses Fassungsvermögen der Magazine ermittelt, das sich bei andern Magazinen entsprechend verändert.

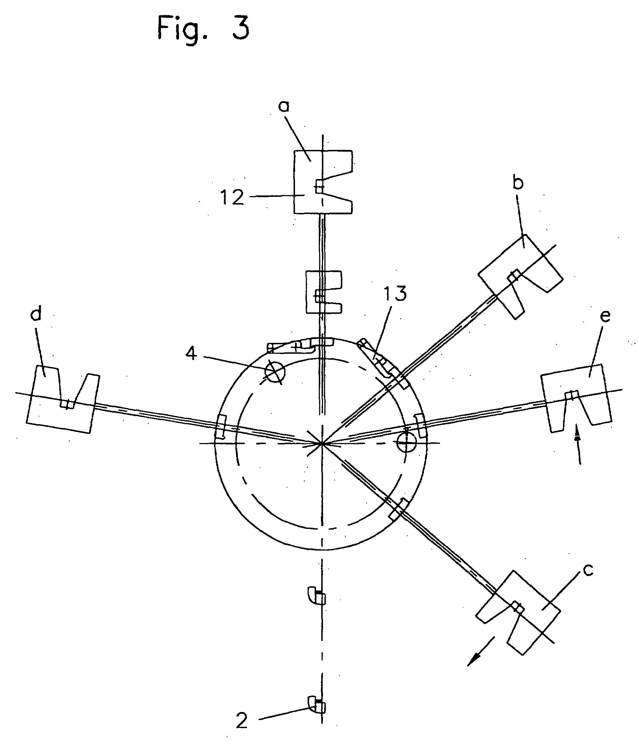

Das Verfahren wird im folgenden anhand der Zeichnung mit den Figuren 1a bis 4 beschrieben. Es zeigt:
Figur 1a das Bauprinzip ,
Figur 1b die Fräsvorrichtung,
Figur 1c die Vermessungsstation,
Figur 2 das Lager des Pendelhammers,
Figur 3 Phasen der Pendelhammerbewegung,
Figur 4 den Ablauf der automatischen Kerbschlagbiegeversuche.

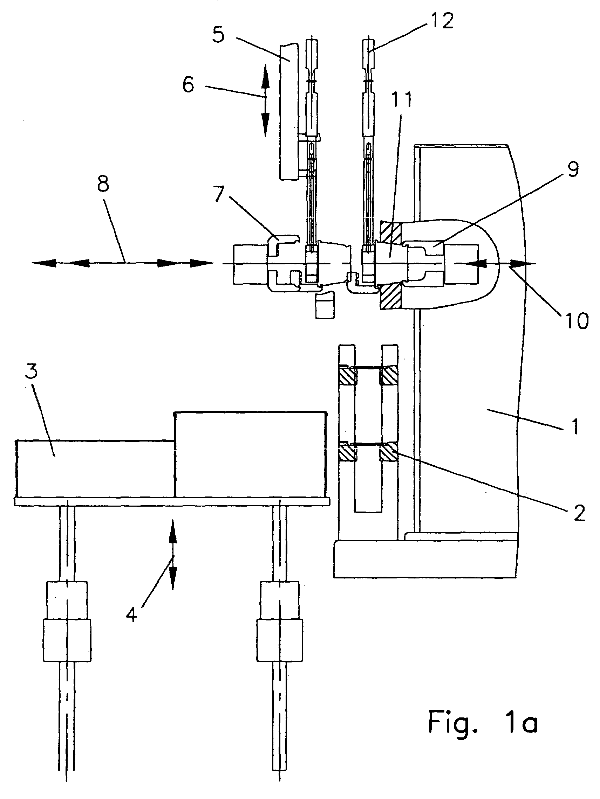

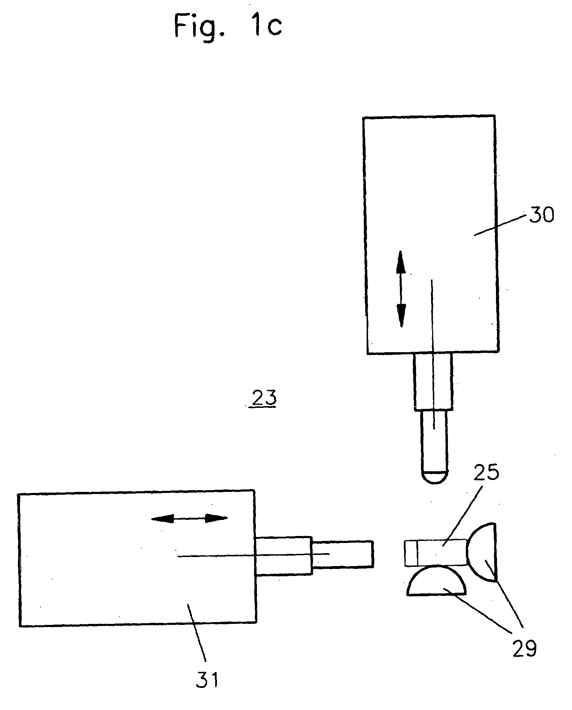

Die Einrichtung (Figur 1a) besteht aus den Baugruppen einsäuliges Pendelschlagwerk 1 mit dem zweistöckigen Auf- und Widerlagerbock 2, der höhenverstellbaren ersten Temperier- und Zuführeinheit 3 für die Kerbschlagproben. Hinzu kommt das Magazin 5 für die Pendelhämmer 12, in der Pendelhämmer von 0,5 Joule bis 50 Joule abgehängt sind. Mit der Anhebungseinrichtung 6 des Pendelmagazins, dem Transportgreifer 7 der Pendelhammerzuführung und dem zweistufigen Antrieb 8 für die Pendelhammer-Zuführung wird immer ein Pendelhammer entnommen, zum Schlagwerk transportiert und eingesetzt oder umgekehrt. Der eingesetzte Pendelhammer 12 wird mit dem Greifer 9 am Pendelschlagwerk 1 über den Antrieb 10 gegriffen und herangezogen. Die Außenform des Werkzeugkegels 11 ist genormt und innen an Pendelhammergruppen angepaßt, so daß am Pendelschlagwerk selber keine verschiedenen Kegelgeometrien 15 verwendet werden müssen oder zumindest für eine Gruppe an Pendelhämmern ein und derselbe ist.

Am Eingang der Temperier- und Zuführeinheit 3 endet eine Probenzuführschiene an. An ihren Anfang, vom Ablauf der Kerbschlag-Biege-Versuche her gesehen, sind zwei Gruppen positionierbar, zum einen die Gruppe aus der Fräsvorrichtung 21 für die Proben mit der zweiten Temperiervorrichtung 22 und zum andern die Gruppe aus der Vermessungseinheit 23 zur Erfassung der Konturgeometrie der für den Kerbschlag vorzubereitenden Proben. Beide Gruppen sind in der Figur 1a nicht angedeutet, da die Führung der Probenzuführschiene zwar möglichst kurz aber doch auch anlagenindividuell ist.

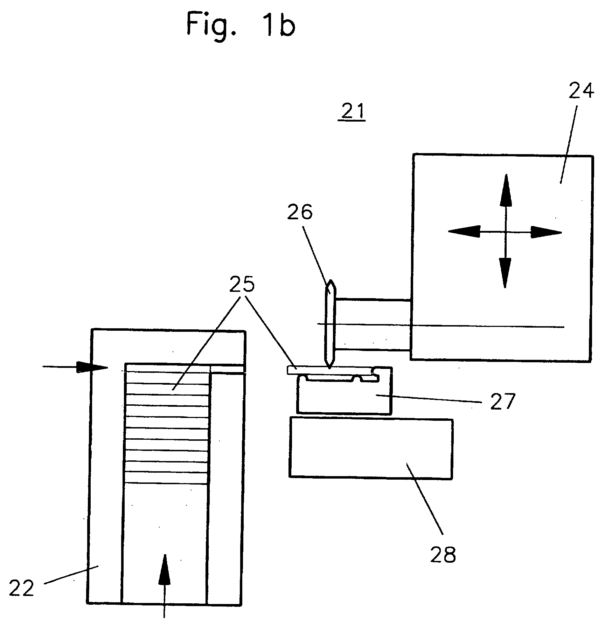

Die Fräsvorrichtung 21 ist in Figur 1b skizziert und besteht aus dem Fräsantrieb 24 mit einem xy-Tisch zur Feinpositionierung der zu fräsenden Probe 25. Auf der Antriebsachse des Fräsantriebs 24 ist beispielsweise der Einzahnfräser 26 gespannt, der die auf der Probenspannvorrichtung 27 mit Anschlag positionierte, zuvor über die vertikale Vorschubeinheit 28 angehobene Probe an vorgegebner Position fräst. Die Auswurföffnung der zweiten Temperiervorrichtung 22 ist entsprechend zur Probenspannvorrichtung 27 positioniert. Die gefräste Probe wird über die vertikale Vorschubeinheit 28 auf das Niveau der weiterführenden Transportschiene gehoben und abgezogen.

Im Falle der notwendigen Vermessung führt diese Transportschiene auf dem kürzest möglichen Weg zur Vermessungseinheit 23 zu zwei Anschlägen 29, gegen die die Probe 25 mit der vertikalen Messachse 30 und horizontalen Messachse 31 geschoben wird.

Es sind also drei Möglichkeiten gegeben, die Proben 25 dem Kerbschlag-Versuch, d.h. der Eingangsöffnung an der ersten Temperier- und Zuführeinheit 3 zuzuführen:
Einmal direkt, dann ist die Probe oder sind die Proben der Serie bis auf die Kerbschlagtemperatur vorbereitet.
Zweitens, die Proben der Serie müssen nur noch vermessen werden, sie sind also bis auf die Kerbschlagtemperatur schlagbereit.
Drittens, die Proben der Serie müssen gekerbt und vermessen werden, dann werden die Fräsvorrichtung 21 und die nachfolgende Vermessungseinheit 23 an die Probentransportschiene zum Eingang an der ersten Temperiervorrichtung 3 gefahren.

Die Datenverarbeitungseinrichtung mit untergeordneter speicherprogrammierbarer Steuerung, SPS, die die Einrichtung nach Probendateneingabe steuert, ist nicht eingezeichnet.

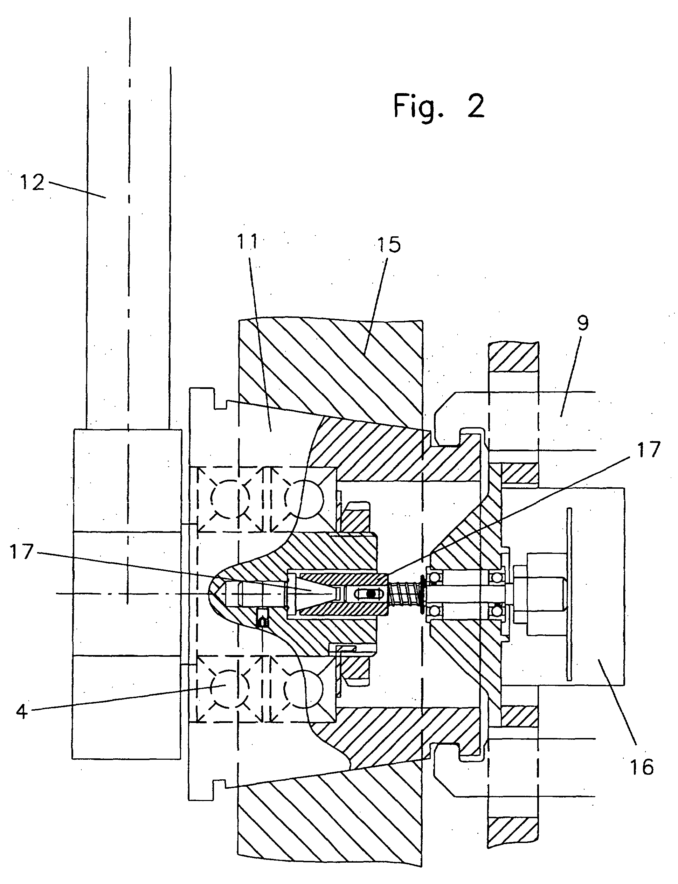

Der Pendelhammer 12 ist an seiner Drehachse mit dem einseitig aufsitzenden Werkzeugkegel 11 drehbar durch die Lager 4 gefaßt und wird in die Kegelaufnahme 15 am Pendelschlagwerk 1 eingeführt (Figur 2). Mit dem Greifer 9 am Pendelschlagwerk wird der Pendelhammer in die Kegelaufnahme 15 gezogen, so daß dort ein Form- und Kraftschluß besteht.

Der inkrementale Drehwinkelgeber 16 sitzt ebenfalls auf der Drehachse des Pendelschlagwerks 1 und wird beim Einsetzen des Pendelhammers über den V-förmigen, federbelasteten Mitnehmer 17 in die Achse des Pendelhammers 12 eingerastet, beim Pendeln des ausgeklinkten Pendelhammers 1 mitgedreht und seine Winkelposition mit der Datenverarbeitungsanlage mit verfolgt.

Zum Wechsel des Pendelhammers 12 ist derselbe in der vertikalen Wechselposition a. In dieser wird er eingesetzt oder entnommen, in dieser Stellung wird er auch transportiert und im Magazin 5 an der vorgesehen Position abgehängt. In der Wechselposition a wird der Pendelhammer 12 über den Auslöseriegel 13 gehalten und in die Ausklinkposition b mit dem Ausklinkwinkel α gedreht. Die Ausklinkposition ist variabel und wird von der Datenverarbeitungsanlage vorgegeben. Sie ist zwischen 0°, Wechselposition, und 180°, Schlagposition, einstellbar. Liegen wird sie überwiegend zwischen 0 und 90°.

In Ausklinkposition b wird der Pendelhammer 12 durch Öffnen des Auslöseriegels 13 zum Fall c freigegeben. Am tiefsten Punkt seiner Bahn, wo die gesamte Lageenergie in Bewegungsenergie umgesetzt ist, durchschlägt er die auf dem Auf- und Widerlager positionierte Probe und bewegt sich danach mit der verbliebenen kinetischen Energie zum Aufstieg weiter, die an der Steigposition d mit dem zu registrierenden Steigwinkel β in die um Reibung und für den Schlag notwendige Energie verbliebene Lageenergie umgewandelt sein wird. Von dieser Steigposition d mit dem probenindividuellen Winkel ^{β} aus beginnt der Pendelhammer 12 wieder zurück zu fallen, gleichzeitig aber beginnt sich die motorisch angetriebene Mitnehmerscheibe mit ihrem gummierten, oberhalb der maximalen Steigposition d lauernden Mitnehmer 14 mit zurück zu drehen und fängt den Pendelhammer 12 in der Position e sanft ein, dreht ihn weiter, um ihn vollends am Auslöseriegel einzuhängen. Der Mitnehmer wird wieder in die Warteposition zurück-, der Pendelhammer 12 in die Auslöseposition b mit dem Fallwinkel α gedreht und nach dem Positionieren der neuen Probe zum nächsten Schlag ausgelöst.

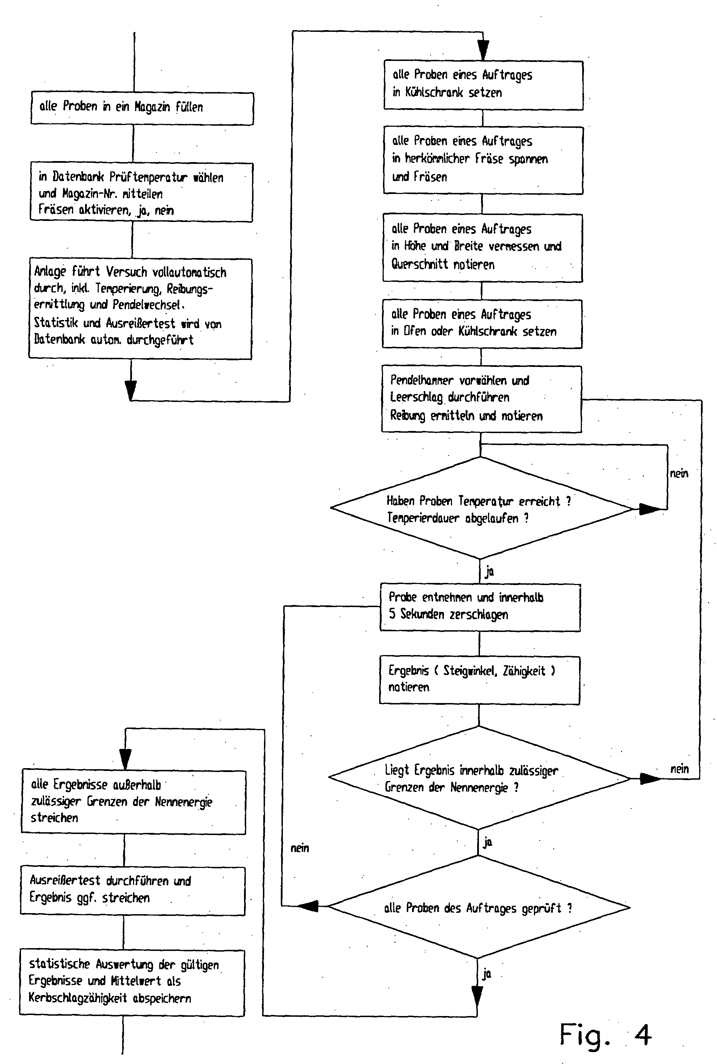

Das Ablaufschema in Figur 4 zeigt, wie das automatisierte Verfahren einer Probenserie abläuft. Die Proben werden charakterisiert, d.h. ihre spezifischen Daten, wie Material, Schlagtemperatur, Anzahl, Magazinnummer, erstes gewähltes Pendel einer Serie, das Anfangspendel oder Vorschlagspendel, und Ausklinkwinkel α in den Rechner eingegeben. Wenn keine automatisierte Probenvermessung erfolgt, wird die Probengeometrie noch aufgenommen und in der Datenverarbeitungsanlage abgelegt.

Soll in jede Probe einer Serie eine Kerbe gefräst werden, werden die Proben der Serie der zweiten Temperiereinrichtung 22 zugeführt, auf Frästemperatur gebracht - bei Kunststoffen auf Frästemperatur gekühlt - auf der Probenspannvorrichtung 27 positioniert und gefräst. Danach werden die Proben nacheinander in der Vermessungseinheit 23 nach ihrer Konturgeometrie vermessen und anschließend der ersten Temperiereinrichtung 3 magaziniert zugeführt.

Das mit den zu schlagenden Proben gefüllte Magazin wird in die Temperiereinrichtung 3 geschoben und die Proben darin auf die vorgesehene Solltemperatur zwischen -190°C und +700°C gebracht. Sodann wird ein Pendelhammer aufgrund der Eingabe vorgewählt, aus dem Magazin gegriffen, zum Pendelschlagwerk transportiert und eingesetzt. In einem allerersten Leerschlag wird die Reibung für den eingesetzten Hammer ermittelt und abgespeichert. Haben die Proben die Solltemperatur erreicht, wird diese Temperatur gehalten, die erste Probe entnommen, auf den Auf- und Widerlagerbock transportiert und positioniert und innerhalb 2 sec zerschlagen. Die Ergebnisse, wie Steigwinkel β, Schlagzähigkeit, werden aufgenommen. Es wird überprüft, ob das Ergebnis innerhalb vorgegebener, zulässiger Grenzen der Nennenergie liegt. Wenn ja, wird eine neue Probe aus der Temperiereinrichtung entnommen und zum Schlag positioniert. Wenn nein, wird ein Pendelhammerwechsel vorgenommen und die Kerbschläge fortgeführt. Bei 8 Pendelhämmern im Magazin beispielsweise steht im schlechtesten Fall nach 4 Vorversuchen der richtige Pendelhammer sicher fest und die eigentliche Schlagserie kann durchgeführt werden. Bei mehr oder weniger Pendelhämmern sind entsprechend mehr oder weniger logikverknüpfte Vorversuche nötig.

Für jede Serie werden die Ausreißertests durchgeführt, um Meßoder Verfahrensfehler oder infolge nicht exakt gleicher Herstellung Ungleichartigkeiten der Probenkörper zu eliminieren. Das geschieht über mathematische Standardverfahren, die der Datenverarbeitungsanlage eingegeben sind und bei Bedarf aktiviert werden.

Nach Durchlauf der Serie werden die Ergebnisse davon mit der Datenverarbeitungsanlage verarbeitet. Zunächst werden alle Ergebnisse außerhalb zulässiger Grenzen der Nennenergie gestrichen, dann werden Ausreißertests durchgeführt und Streichungen vorgenommen. Mit den brauchbaren Daten wird dann die statistische Auswertung der gültigen Ergebnisse durchgeführt und der ermittelte Mittelwert der Kerbschlagzähigkeit zur Weiterverwendung und Dokumentation abgespeichert.

Eine optionale Funktionseinheit besteht darin, bei Proben aus weichen Materialien, wie z. B. Polyethylen, die Kerbe erst unmittelbar vor dem Kerbschlagbiegeversuch anzubringen. Unterkühlt läßt sich Polyethylen gut fräsen. Das kann in der Grundkonzeption der Einrichtung berücksichtigt werden.

Hierzu wird die Temperiereinrichtung zum Temperieren für das Fräsen und die Fräse mit der Vermessungseinrichtung an ihrem Ausgang über den Zubringer an den Eingang der Temperiereinrichtung zur Temperierung für den Kerbschlagbiegeversuch gelegt. Dieser Zubringer kann wahlweise dort zu- oder weggeschwenkt werden. Diese Einrichtung ist ebenfalls mit der Steuerung und Datenverarbeitung gekoppelt und kann daher ebenfalls wahlweise von Hand oder über das Automatisierungsprogramm im notwendigen Umfang betrieben werden.

Als Kühlmedium in der Temperiereinrichtung kommt beispielsweise LN₂ (liquid nitrogen) in Betracht, aber auch die Verwendung eines Kälteaggregats ist je nach Material sinnvoll. Die Einstellparameter sind beispielsweise:
Kühltemperatur: - 40°C bis + 10°C,
Verweilzeit einer Probe in der Kühl- bzw. Temperiereinheit: 5 bis 20 min,
Probenkapazität: ca. 40.

Die eingestellte Temperatur wird beispielsweise auf ± 2 K gehalten.

Nach dem Fräsvorgang kann die ausgeworfene Probe vermessen werden. Mit dem Programm läßt sich dies einrichten. Vermessen werden die Kontour und insbesondere die Restbreite an Material vom Fuß der Kerbe bis zur gegenüberliegenden Kante der Probe. Da mit der Einstellung der Fräse und der Automatisierungsmöglichkeit die Verstellung der Fräse jederzeit gegeben ist, können aussagekräftige statistische Untersuchen sehr sorgfältig durchgeführt werden.

Proben können nicht nur einseitig sondern auch doppelseitig, d. h. Kerben einander gegenüberliegend, gefräst werden. Dazu müssen sie nach dem Anbringen der ersten Kerbe erneut wieder der Temperiereinrichtung fürs Fräsen zugeführt werden. Mit einer durch eine steuerbare Weiche am Ausgang der Vermessungseinheit abzweigenden Rückführung zur Temperiereinrichtung läßt sich das auch automatisch bei entsprechender Wahl des Programmablaufs einrichten. Der Bediener speichert mit dem Automatisierungsprogramm für jede Probenserie einen Fräsauftrag in der Datenbank ab und legt die dazugehörigen Proben in den Probenträger ein. Die eingegebenen Fräsaufträge der Datenbank werden entsprechend der Priorität abgearbeitet.

### Bezugszeichenliste:

- 1: Pendelschlagwerk
- 2: Auf- und Widerlagerbock
- 3: erste Temperier- und Zuführeinheit
- 4: Höhenverstellung
- 5: Magazin für Pendelhämmer
- 6: Anhebung für das Pendelmagazin
- 7: Greifer der Pendelhammerzuführung
- 8: Antrieb der Pendelhammerzuführung
- 9: Greifer für den Werkzeugkegelspanner
- 10: Antrieb für den Werkzeugkegelspanner
- 11: Werkzeugkegel der Pendelhammerlagerung
- 12: Pendelhammer
- 13: Auslöseriegel
- 14: Mitnehmerscheibe mit gummiertem Mitnehmer
- 15: Kegelaufnahme
- 16: Drehwinkelgeber
- 17: Mitnehmer zur Kopplung des Drehwinkelgebers
- 18: zweite Temperiereinheit
- 19: Fräseinheit
- 20: Vermessungseinheit
- 21: Fräsvorrichtung
- 22: zweite Temperiervorrichtung
- 23: Vermessungseinheit
- 24: Fräsantrieb
- 25: Probe
- 26: Fräser, Einzahnfräser
- 27: Probenspannvorrichtung
- 28: vertikale Vorschubeinheit
- 29: Anschlag
- 30: vertikale Messachse
- 31: horizontale Messachse

## Patentansprüche

1. Einrichtung für selbsttätig ablaufende Kerbschlagbiegeversuche, bestehend aus:
- einem Pendelschlagwerk (1) in Einsäulenbauweise mit einer kegeligen Werkzeugaufnahme für einen Pendelhammer (12) und einer Greifvorrichtung (7), mit der der Pendelhammer für den Schlag form- und kraftschlüssig an das Pendelschlagwerk gekoppelt wird,
- mindestens einem Auf- und Widerlagerbock (2) für die zu schlagenden Proben,
- einem Magazin für Pendelhämmer (5) unterschiedlicher Schlagenergie,
- einer Anhebe- und Transporteinrichtung (6) für einen Pendelhammer, mit der ein Pendelhammer über eine Transportgreifvorrichtung aus dem Magazin entnommen oder darin abgesetzt und mit der der Pendelhammer in das Pendelschlagwerk eingesetzt oder davon abgegriffen wird,
- einem Drehwinkelgeber (16) auf der Drehachse des Pendelhammers, der über einen Mitnehmer beim Einsetzen des Pendelhammers mit dem Pendelschlagwerk gekoppelt oder beim Abziehen des Pendelhammers vom Pendelschlagwerk davon entkoppelt wird,
- einer ersten Temperier- und Zuführeinheit (3) für Kerbschlagproben mit Höhenverstellung (4) zum sukzessiven Ablegen der vorgegeben temperierten Proben auf einem der Auflager,
- einer zweiten Temperiereinheit (18), in der die Probe oder die Serie an zu schlagenden Proben vorgegeben temperiert, mit einer davon weiterführenden zweiten Zuführeinheit, mit der die Probe oder die Serie an Proben zum Fräsen einer Schlagkerbe an vorgegebener Stelle einer Fräseinheit zugeführt und dort exponiert werden, und
mit einer dritten Zuführeinheit, die von der Fräseinheit wegführt und in die Beladungsstelle der ersten Temperiereinheit mündet,
- einer elektronischen Steuer- und Datenverarbeitungseinheit, an die die Baugruppen der Einrichtung angeschlossen sind, um eine Schlagzähigkeitsprüfung von einer Serie beliebiger Anzahl gleichartiger Prüflinge aus metallischem oder keramischem oder kunststoffartigem Material gemäß Normvorschrift selbsttätig ablaufen zu lassen, mit der die Meßergebnisse verarbeitet, statistisch ausgewertet und zur Dokumentation abgelegt werden.

2. Einrichtung nach Anspruch 1,
**dadurch gekennzeichnet, daß**
auf der Achse des Pendelschlagwerks eine motorisch angetriebene Mitnehmerscheibe mit einem gummierten Mitnehmer sitzt, von dem der aus der Steigposition nach dem Schlag zurückschwingende Pendelhammer eingeholt und vollends in Ausklingposition gehoben/gedreht wird.

3. Einrichtung nach Anspruch 2,
**dadurch gekennzeichnet, daß**
die Wechselposition des Pendelhammers die instabile senkrechte Lage, 180° entgegen der Schlagposition ist, in der ihn ein Auslöseriegel hält.

4. Einrichtung nach Anspruch 3,
**dadurch gekennzeichnet, daß**
der den Pendelhammer haltende Auslöseriegel zur Einleitung des Schlages mit diesem in die vorgebbare Auslöseposition α dreht.

5. Einrichtung nach Anspruch 4,
**dadurch gekennzeichnet, daß**
die unterschiedlichen Pendelhämmer mit jeweils normvorgegebener Schlagenergie im Magazin hintereinander und neben der Schlagebene abgehängt sind.

6. Einrichtung nach Anspruch 5,
**dadurch gekennzeichnet, daß**
jeder Pendelhammer zum Transport und Schlag in einem Werkzeugkegel sitzt, der nahe der beiden Stirnseiten in der Mantelfläche je eine Ringnut zum Greifen desselben durch einerseits die Transportgreifvorrichtung und andrerseits durch die Greifvorrichtung am Pendelschlagwerk hat.

7. Einrichtung nach Anspruch 6,
**dadurch gekennzeichnet, daß**
am Ausgang der Fräseinheit eine Vermessungseinheit installiert ist, mit der die ausgeworfene gefräste Probe in ihrer Kontour und verbliebenen Materialbreite, der Restbreite, am Fuße der Kerbe vermessen wird.

8. Einrichtung nach Anspruch 7,
**dadurch gekennzeichnet, daß**
die Vermessungseinheit ein Meßtaster mit inkrementalem Maßstab und einer Auswerteeinheit ist, die pneumatisch oder hydraulisch oder elektrisch betätigt wird.

9. Einrichtung nach Anspruch 7,
**dadurch gekennzeichnet, daß**
die Vermessungseinheit eine an die Datenverarbeitungseinheit angeschlossene Kamera ist.

10. Einrichtung nach den Ansprüchen 8 und 9,
**dadurch gekennzeichnet, daß**
die elektronische Steuereinheit der Einrichtung eine speicherprogrammierte Steuerung, SPS, ist, die der Datenverarbeitungseinheit untergeordnet ist.

11. Einrichtung nach Anspruch 10,
**dadurch gekennzeichnet, daß**
die Anhebe- und Transporteinrichtung, die Transportgreifvorrichtung und die Werkzeuggreifvorrichtung pneumatisch oder hydraulisch oder elektrisch oder mit diesen Antriebsarten gemischt versehen sind.

12. Verfahren zum Durchführen von normgerechten Kerbschlagbiegeversuchen mit einer Serie gleichartiger Proben beliebiger Anzahl,
bestehend aus den manuell in die Wege geleiteten oder automatisch ablaufenden Schritten:
- alle gleichartigen, zu schlagenden Proben einer Serie für einen Kerbschlagbiegeversuch werden
entweder,
falls sie noch keine Schlagkerbe haben,
einer zweiten Temperiereinheit, einzeln oder magaziniert, zugeführt, um sie darin auf eine für einen anschließenden Fräsvorgang geeignete Temperatur zu bringen,
daraus einer Kerbfräse zum Fräsen der mindestens einen Kerbe an jeder Probe an vorgesehenem Ort zugeführt und dann in das Magazin einer ersten Temperier- und Zuführeinheit für Kerbschlagproben
oder
falls sie schon eine Schlagkerbe haben, sofort in ein solches
gegeben,
- in eine Datenverarbeitungseinheit werden die Prüftemperatur und die Identifikationsnummer des Magazins sowie die Materialparameter der zu schlagenden Proben eingegeben und der Kerbschlagbiegeversuch dieser Serie durch Aktivieren der Einrichtung gestartet,
weiter bestehend aus den automatisch ablaufenden Schritten:
- ein aufgrund der Probeneigenart vorgewählter Pendelhammer entsprechender Schlagenergie wird über eine Anhebe- und Transporteinrichtung aus einem Magazin für Pendelhämmer jeweils unterschiedlicher Schlagenergie gegriffen, in Wechselposition auf das Pendelschlagwerk gesetzt, in eine Ausklinkposition, einem Fallwinkel α, gedreht und zum dem Kerbschlagversuch vorausgehenden Leerschlag zur Ermittlung des Steigwinkels β und damit der Reibung des Pendelschlagwerks ausgeklinkt,
- nach Erreichen der vorgegebenen Temperatur, der zumindest in der Serie vorne liegenden Proben wird die erste Probe entnommen und auf eines der Auf- und Widerlager geschoben und der inzwischen wieder in die Ausklingposition, Fallwinkel α, gebrachte Pendelhammer erneut zum ersten Schlagversuch ausgeklinkt, bei dem die Schlagparameter erfaßt und abgelegt werden und der Schlagenergiebereich mit der Norm zur Bestimmung des Pendelhammers mit optimaler Schlagenergie ermittelt,
- gegebenenfalls wird zur Findung der optimalen Schlagenergie ein Pendelhammerwechsel durchgeführt und mit dem neuen Hammer erneut eine aufgelegte, temperierte Probe zerschlagen,
- nach Ermittlung des geeigneten Pendelhammers beginnt der eigentliche Kerbschlagversuch mit dem Drehen des eingespannten Pendelhammers in die Ausklinkposition, dem vorgegebenen Fallwinkel α, dem Zuführen der temperierten Probe auf das festgelegte Auf- und Widerlager, dem Ausklinken des Pendelhammers, der Registrierung der Schlagparameter: Auftreffgeschwindigkeit und Steigwinkel β, dem Auffangen und erneuten Positionieren des zurückschwingenden Hammers zum Ausklinken für den folgenden Schlag, bis die eingelegte Serie erschlagen ist,
- die Ergebnisse werden mit der Datenverarbeitungseinheit untersucht, d.h. alle Ergebnisse außerhalb der Grenzen der Nennenergie werden gestrichen,
- die brauchbaren Ergebnisse werden statistisch untersucht und die daraus ermittelte mittlere Kerbschlagzähigkeit zur Dokumentation und Weiterverwendung gespeichert.

13. Verfahren nach Anspruch 12,
**dadurch gekennzeichnet, daß** mit einer am Ausgang der Fräseinheit installierten Vermessungseinheit die nach dem Fräsvorgang ausgeworfene Probe in ihrer Kontour und verbliebenen Materialbreite, der Restbreite, am Fuße der Kerbe vermessen wird und diese Daten der Datenverarbeitungseinheit zugeführt werden.

## Claims

1. Device for automatic notched-bar impact tests consisting of
- a single-column pendulum impact tester (1) with a conical tool seat for an impact pendulum (12), and a gripping device (7) positively and non-positively coupling the impact pendulum to the pendulum impact tester for the impact;
- at least one support and abutment (2) for the specimens to be impacted;
- a magazine for impact pendula (5) of different impact energies;
- a lifting and transport device (6) for an impact pendulum, by means of which an impact pendulum can be taken out of, or deposited in, the magazine by a transport gripping device, and by means of which the impact pendulum is inserted into, or taken off, the pendulum impact tester;
- an angle-of-rotation transducer (16) on the axis of rotation of the impact pendulum, which is coupled by a dog to the pendulum impact tester when the impact pendulum is inserted, or decoupled from the pendulum impact tester when the impact pendulum is taken off;
- a first temperature stabilizing and feeding unit (3) for notched-bar impact test specimens, with a vertical adjustment device (4) for successive deposition on one of the supports of the specimens stabilized at a given temperature;
- a second temperature stabilizing unit (18) in which the specimen or the series of specimens to be impacted are stabilized at a given temperature, with a second feeding unit continuing from the first one, by means of which the specimen or series of specimens are fed to a milling unit for milling an impact notch in a given position, and exposed there, and with a third feeding unit leading out of the milling unit and converging at the feeding position of the first temperature stabilizer unit;
- an electronic control and data processing unit to which the components of the device are connected so that an impact strength test of a series of any number of identical specimens out of a metal or ceramic or polymer-type material can be made to run automatically according to standard regulations, by means of which the measured results are processed, evaluated statistically, and filed for documentation.

2. Device as claimed in Claim 1 above,
where the axis of the pendulum impact tester carries a motor-driven dog plate with a rubberized dog which captures the impact pendulum returning from its rising position after the impact, and fully lifts/turns it into the release position.

3. Device as claimed in Claim 2 above,
where the changing position of the impact pendulum is the unstable vertical position, 180° in the opposite direction of the impact position, in which it is held by a release catch.

4. Device as claimed in Claim 3 above,
where the release catch holding the impact pendulum is turned, together with it, into the presettable release position, α, to initiate the impact.

5. Device as claimed in Claim 4 above,
where the different impact pendula, each with a standardized preset impact energy, are suspended in the magazine in a row and next to the impact plane.

6. Device as claimed in Claim 5 above,
where each impact pendulum rests in a tool cone for transport and impact, which cone has one angular groove each close to the two front faces in the surface area for gripping, on the one hand, by the transport gripping device and, on the other hand, by the gripping device of the pendulum impact tester.

7. Device as claimed in Claim 6 above,
where a gauging unit is installed at the output end of the milling unit, by which the milled specimen ejected is gauged with respect to its contour, residual width of material, residual width at the root of the notch.

8. Device as claimed in Claim 7,
where the gauging unit is a tracer with incremental scales and an evaluation unit actuated pneumatically or hydraulically or electrically.

9. Device as claimed in Claim 7 above,
where the gauging unit is a camera connected to the data processing unit.

10. Device as claimed in Claims 8 and 9 above,
where the electronic control unit of the device is a stored program control system, SPC, subordinate to the data processing unit.

11. Device as claimed in Claim 10 above,
where the lifting and transport device, the transport gripping device, and the tool gripping device are equipped with pneumatic or hydraulic or electric drives or a mixture of these drives.

12. Method of executing standard notched-bar impact tests of a series of any number of identical specimens, comprising these steps introduced manually or performed automatically:
- All identical specimens to be impacted of a series for a notched-bar impact test either, in case they do not yet have an impact notch, are fed to another temperature stabilizing unit singly or in magazines, where they are brought to the temperature suitable for a subsequent milling step, from where they are fed to a notch milling cutter for milling at least one notch in each specimen at the space provided for, and then moved into the magazine of a first temperature stabilizing and feeding unit for notched impact test specimens or, in case they already have an impact notch, are moved immediately into such latter unit;
- a data processing unit is entered the test temperature and the identification number of the magazine as well as the materials parameters of the specimens to be notched, and the notched-bar impact test of that series is started by activation of the device;
further consisting of these automatic steps:
- an impact pendulum of the appropriate impact energy preselected on the basis of specimen characteristics is gripped by a lifting and transport device out of a magazine for impact pendula of different impact energies, placed on the pendulum impact tester in a change position, turned into a release position under a drop angle, α, and released for the idle impact preceding the notched-bar impact test to determine the angle of inclination, β, and thus the friction of the pendulum impact tester;
- after reaching the preset temperature at least of the specimens lying in front in the series, the first specimen is taken out and pushed on one of the supports and abutments, and the impact pendulum meanwhile returned into its release position, drop angle, α, is released again for the first impact test in which the impact parameters are collected and filed, and the range of impact energy is determined on the basis of the standard to find the impact pendulum with the optimum impact energy;
- if necessary, a change of impact pendula is carried out in an attempt to find the optimum impact energy, and the new impact pendulum is applied again to a temperature-stabilized specimen put into place;
- after determining the suitable impact pendulum, the real-notched bar impact test begins by turning the impact pendulum engaged into the release position, the preset drop angle, α, feeding the temperature-stabilized specimen to the defined support and abutment, releasing the impact pendulum, recording the impact parameters: impact velocity and angle of inclination, β; catching and repositioning the impact pendulum swinging back for release for the next impact, until the entire series in place has been impacted;
- the results are examined by means of a data processing unit, i.e., all results outside the bounds of the rated energy are deleted;
- the useful results are examined statistically, and the mean notch impact strength determined on this basis is stored for documentation and further use.

13. Method as claimed in Claim 12 above,
where a gauging unit installed at the output end of the milling unit is used to gauge, at the root of the notch, the contour, residual width of material, residual width of the specimen ejected after the milling process, which data are then fed to the data processing unit.

## Revendications

1. Dispositif d'essai de résilience qui consiste en
- un mouton pendulaire (1) à colonne unique équipé d'un raccordement d'outil conique pour un marteau articulé (12) et d'un grappin (17) servant à l'accouplement à crabot et par adhérence du marteau articulé au mouton pendulaire pour effectuer le coup,
- au moins un tréteau et une butée (2) pour les éprouvettes à soumettre à l'essai au choc,
- un magasin à marteaux articulés (5) à différentes énergies de choc,
- un dispositif de soulèvement et de transfert (6) pour un marteau articulé servant à prélever, par un grappin de transfert, un marteau articulé du magasin
ou à le déposer dans celui-ci ou à insérer le marteau articulé dans le mouton pendulaire ou à le prélever de celui-ci,
- un transmetteur d'angle de rotation (16) sur l'axe de rotation du marteau articulé qui est accouplé au mouton pendulaire par un dispositif d'entraînement, au moment de l'insertion du marteau articulé ou qui en est découplé lorsque le marteau articulé est retiré du mouton pendulaire,
- une première unité de traitement thermique et d'amenage pour éprouvettes entaillée équipée d'un ajustage vertical (4) pour le dépôt successif des éprouvettes tempérées à la température donnée, sur un des supports,
- une deuxième unité de traitement thermique (18) dans laquelle l'éprouvette ou la série d'éprouvettes à soumettre à l'essai de choc est tempérée à la température donnée, avec une deuxième unité d'amenage la reprenant, à l'aide de laquelle l'éprouvette ou la série d'éprouvettes est transférée pour fraiser une entaille à un endroit donné et pour l'exposer, et
avec une troisième unité d'amenage partant de l'unité de fraisage et débouchant sur le point de chargement de la première unité de traitement thermique,
- une unité de commande et de traitement de données électronique à laquelle sont raccordés les composants de l'installation pour réaliser en mode automatique un essai de résilience sur un nombre quelconque d'éprouvettes similaires en matériau métallique, céramique ou plastique conformément aux dispositions des normes, qui sert au traitement, au dépouillement statistique et à l'archivage des résultats de mesure.

2. Dispositif selon la revendication 1,
**caractérisé en ce que**
sur l'axe du mouton pendulaire, il se trouve un disque d'entraînement avec un entraîneur gommé, à partir duquel le marteau articulé, revenant de la position montante après le coup, est rentré et levé/tourné finalement en position d'amortissement.

3. Dispositif selon la revendication 2,
**caractérisé en ce que**
la position de pivotement du marteau articulé est la position verticale instable, à 180° par rapport à la position de choc dans laquelle il est maintenu par un verrou déclencheur.

4. Dispositif selon la revendication 3,
**caractérisé en ce que**
pour déclencher le choc, le verrou déclencheur maintenant le marteau articulé tourne avec celui-ci dans la position de déclenchement α pouvant être prédéfinie.

5. Disposition selon la revendication 4,
**caractérisé en ce que**
les différents marteaux articulés, d'une énergie de choc donnée par la norme, sont décrochés dans le magasin les uns derrières les autres et à côté du plan de choc.

6. Dispositif selon la revendication 5,
**caractérisé en ce que**
pour le transport et pour le choc, chaque marteau articulé est placé dans un cône d'outil qui près de chacun des deux fronts dans la surface latérale possède une rainure pour le saisir d'une part par le grappin de transport et d'autre part par le grappin disposé sur le mouton pendulaire.

7. Dispositif selon la revendication 6,
**caractérisé en ce que**
une unité de mesurage est installée à la sortie de l'unité de fraisage, à l'aide de laquelle le contour et la largeur de matériau final, la largeur résiduelle de l'éprouvette fraisée éjectée est mesurée à la base de l'entaille.

8. Dispositif selon la revendication 7,
**caractérisé en ce que**
l'unité de mesure est un palpeur à échelle incrémentielle comportant une unité d'analyse actionnée par voie pneumatique, hydraulique ou électrique.

9. Dispositif selon la revendication 7,
**caractérisé en ce que**
l'unité de mesurage est une caméra raccordée à l'unité de traitement de données.

10. Dispositif selon les revendications 8 et 9,
**caractérisé en ce que**
l'unité de commande électronique est une commande par programme enregistré, subordonnée à l'unité de traitement de données.

11. Dispositif selon la revendication 10,
**caractérisé en ce que**
l'installation de soulèvement et de transfert, le grappin de transport et le grappin d'outil sont équipés de moyens pneumatiques, hydrauliques ou électriques ou d'une combinaison de ces moyens d'entraînement.

12. Procédé de réalisation d'essais de résilience conformes à la norme, couvrant
une série d'éprouvettes similaires d'un nombre quelconque,
composé des opérations suivantes, initiées par voie manuelle ou se déroulant automatiquement:
- Toutes les éprouvettes similaires d'une série à soumettre au choc pour un essai de résilience sont,
au cas, où elles ne présentent pas encore d'entaille,
amenées individuellement ou en magasin à une deuxième unité de traitement thermique, pour les mettre à une température appropriée à une opération de fraisage consécutive,
d'où elles sont amenées à une fraise à entailler pour fraiser au moins une entaille sur chaque éprouvette à l'endroit prévu, et ensuite au magasin d'une première unité de traitement thermique et d'aménagé pour éprouvettes à soumettre à l'essai de choc
ou
au cas où elles présentent déjà une entaille, elles sont immédiatement introduites dans un tel magasin,
- dans une unité de traitement de données, la température d'essai et le numéro d'identification du magasin ainsi que les paramètres du matériau des éprouvettes à soumettre au choc sont enregistrés, et l'essai de résilience de cette série est démarré par activation de cette installation,
composé en outre des opérations automatiques suivantes:
- un marteau articulé sélectionnée en fonction des caractéristiques de l'éprouvette, d'une énergie de choc correspondante, est pris dans un magasin à marteaux articulés à différentes énergies de choc, à l'aide d'une installation de soulèvement et de transfert, déposé en position alternante sur le mouton pendulaire, tourné dans une position de déclenchement sous un angle de chute α et déclenché au coup à vide précédant l'essai de résilience effectué pour déterminer l'angle de montée β et par conséquent le frottement du mouton pendulaire,
- après avoir atteint la température donnée du moins dans les éprouvettes situées en avant, la première éprouvette est prélevée et placée sur un des tréteaux et butées, et le marteau articulé, remis en position de déclenchement, angle de chute α, est à nouveau déclenché pour effectuer le premier essai de coup auquel les paramètres de coup sont enregistrés et entrés en mémoire, et le domaine d'énergie de choc est déterminé avec la norme servant à définir le marteau articulé ayant l'énergie de choc optimale,
- le cas échéant, pour trouver l'énergie de choc optimale, on procède à un remplacement du marteau articulé, et à l'aide du nouveau marteau, une nouvelle éprouvette tempérée mise en place est brisée,
- après avoir trouvé le marteau articulé approprié, l'essai de résilience proprement dit est commencé en tournant le marteau articulé fixé dans la position de déclenchement, l'angle de chute α donné, après quoi on amène les éprouvettes tempérées au tréteau/à la butée fixés, on déclenche le marteau articulé, on enregistre les paramètres de choc: vitesse d'impact et angle de montée β, on saisit et repositionne le marteau retournant pour le déclencher pour le choc suivant, jusqu'à ce que la série introduite soit brisée,
- les résultats sont analysés par l'unité de traitement de données, c'est-à-dire que tous les résultats au dehors de l'énergie nominale sont rayés,
- les résultats utilisables sont analysés statistiquement, et la valeur de résilience moyenne obtenue est mise en mémoire à des fins de documentation et d'utilisation ultérieure.

13. Procédé selon la revendication 12,
**caractérisé en ce que** grâce à une unité de mesurage installée à la sortie de l'unité de fraisage, le contour et la largeur de matériau restante de l'éprouvette sortie à la fin de l'opération de fraisage sont mesurés à la base de l'entaille et que ces données sont entrées dans l'unité de traitement de données.
